# DEMANDE DE BREVET EUROPEEN

(11) **EP 1 564 874 A1**
(43) Date de publication de la demande: **17.08.2005**
(21) Numéro de dépôt: 05300093.1
(22) Date de dépôt: 04.02.2005
(51) Int. Cl.: H02M 1/00

(54) **Poste de soudage à l'arc à source de puissance et à onduleur**

(30) Priorité: 12.02.2004 FR 0450251
(71) Demandeur: LA SOUDURE AUTOGENE FRANCAISE, 75321 Paris Cédex 07 (FR); L'Air Liquide Société Anonyme à Directoire et Conseil de Surveillance pour l'Etude et Exploitation des Procédés Georges Claude, 75321 Paris Cedex 07 (FR)
(72) Inventeur: Coulibaly, Peyofougou, 95310, Saint Ouen L'Aumone (FR)
(74) Mandataire: Pittis, Olivier

(57) **Abrégé**

Poste de soudage avec source de puissance et onduleur raccordé à une source d'alimentation (8). L'onduleur (28) comprend au moins une cellule de commutation (30) comportant des interrupteurs (32) en série et une borne de sortie (38). La source comprend en outre un circuit de commande (38) desdits interrupteurs (32) délivrant des ordres de blocage et des autorisations d'amorçage et un transformateur (40) relié et à un redresseur (44) délivrant une tension continue de sortie. Cette source de puissance comporte un circuit (50) de détection de la tension aux bornes de chaque interrupteur (32) de l'onduleur (28) et un circuit de pilotage (60) recevant signaux de commande (Sc) et signaux (St) de tension et adapté pour délivrer à chacun des interrupteurs (32) un signal de pilotage (Sp) correspondant à une autorisation d'amorçage lorsque ledit signal de commande (Sc) correspond à une autorisation d'amorçage et que la tension entre les électrodes de puissance est sensiblement nulle.

## Description

La présente invention concerne poste de soudage à l'arc électrique comportant une source de puissance et un onduleur de type dit « quasi-résonant à commutation douce ».

Il existe aujourd'hui dans le domaine de l'électronique dit « électronique de puissance », des sources de puissance permettant de délivrer des tensions de sortie continues qui comportent des onduleurs fonctionnant selon un principe dit « de commutation douce ».

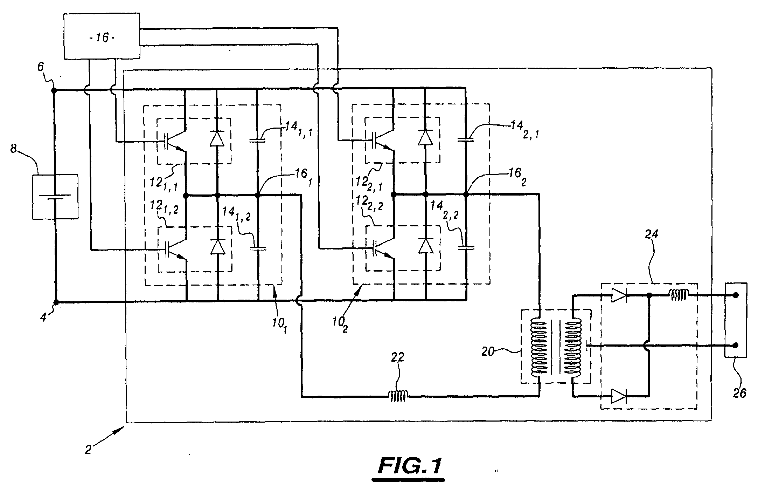

Le schéma électrique d'une telle source connue avec un onduleur de type quasi-résonant à commutation douce, est représenté en référence à la figure 1 dans une configuration fonctionnelle.

L'onduleur 2 est raccordé entre une borne de référence 4 et une borne d'alimentation 6 d'une source de tension continue 8.

Des cellules ou bras de commutation (dits « legs » en anglais) désignés de manière générale par la référence numérique 10 et de manière particulière par les références 10₁ et 10₂, sont disposés en parallèle entre les bornes 4 et 6 de la source de tension 8. Ces cellules 10 comportent chacune deux interrupteurs reliés en série entre les bornes 4 et 6. Les interrupteurs sont désignés de manière générale par la référence numérique 12 et de manière particulière par les références 12_{1,1}, 12_{1,2}, 12_{2,1}, 12_{2,2}.

Chaque interrupteur 12 est formé de manière classique d'un ou de plusieurs transistors (MOSFET ou IGBT par exemple) commandables, aux bornes desquels des diodes sont montées en anti-parallèle.

De plus, chaque interrupteur 12 de chaque cellule de commutation 10, est également monté en parallèle avec un élément capacitif d'aide à la commutation, désigné de manière générale par la référence numérique 14 et de manière particulière par les références numériques 14_{1,1}, 14_{1,2}, 14_{2,1}, 14_{2,2}.

Les cellules de commutation 10₁ et 10₂ présentent ainsi chacune une borne de sortie 16₁ et 16₂ prise entre les deux interrupteurs centraux de chaque cellule.

Par ailleurs, chaque interrupteur 12 de chaque cellule 10 est relié pour sa commande à un dispositif de commande 16 extérieur à l'onduleur 2.

L'onduleur 2 comporte également un transformateur 20 dont le primaire est relié en série entre les deux bornes de sortie 16₁ et 16₂ des cellules de commutation 10₁ et 10₂.

De plus, un élément inductif 22 est relié en série entre le primaire du transformateur et la borne de sortie 16₁ de la cellule 10₁ afin de former un élément résonant.

Le secondaire du transformateur 20 est quant à lui relié à un redresseur 24 dont les bornes de sortie 26 forment la sortie de la source de puissance, soit dans le cadre d'un poste de soudage, les bornes de soudage.

Le fonctionnement et la commande d'un tel circuit sont connus de l'état de l'art.

Le dispositif de commande 18 délivre uniquement des commandes de blocage aux différents interrupteurs 12. La commutation d'un état bloqué à un état passant est réalisée de manière spontanée à tension nulle selon le principe de la commutation douce quasi-résonnante, lors de la réception d'une autorisation d'amorçage émise par le dispositif de commande 18.

En effet, l'énergie réactive stockée dans les éléments de résonance, soit les éléments capacitifs 14 et l'élément inductif 22, auxquels se rajoutent éventuellement les capacités parasites des interrupteurs 12 et l'inductance de fuite du transformateur 20, permet d'obtenir spontanément au niveau des bornes de sortie 16 des cellules 20 des conditions permettant la commutation de l'état bloqué vers l'état passant correspondant à une commutation douce.

Cependant, en classique dans un tel circuit, les commandes de blocage et d'amorçage d'un interrupteur doivent être séparées dans le temps par un temps mort, afin de s'assurer de la décharge complète de condensateurs pour ne pas autoriser l'amorçage d'un interrupteur dont la tension aux bornes n'est pas nulle.

Pour cela, les commandes de blocage et autorisation d'amorçage, doivent être parfaitement synchronisées afin d'empêcher un éventuel court-circuit d'une cellule de commutation.

Ceci pose d'importants problèmes dans les postes de soudage où le courant mis en oeuvre est élevé, de sorte que, pour ne pas s'exposer à un court-circuit, il convient de définir des temps morts longs.

Le problème qui se pose alors est proposer un poste de soudage à l'arc amélioré comportant une source de puissance et un onduleur de type quasi-résonant à commutation douce, permettant d'obtenir un niveau élevé de protection contre les courts-circuits.

La solution de l'invention est un poste de soudage comportant une source de puissance et un onduleur quasi résonnant à commutation douce comportant des moyens de raccordement à une source d'alimentation en énergie électrique présentant une borne d'alimentation en tension continue et une borne de référence, l'onduleur comprenant au moins une cellule de commutation de type quasi résonnant, chacune comportant un nombre pair d'interrupteurs connectés en série entre lesdites bornes d'alimentation et de référence et comportant une borne de sortie prise entre les deux interrupteurs centraux de ladite cellule, chaque interrupteur étant connecté en parallèle à un élément capacitif et en série à un élément inductif formant éléments de résonance, la source comprenant en outre un circuit de commande desdits interrupteurs délivrant des signaux de commande auxdits interrupteurs correspondant à des ordres de blocage et à des autorisations d'amorçage et un transformateur dont l'élément primaire est relié auxdites bornes de sortie des cellules de commutation et dont le secondaire est relié à un redresseur délivrant une tension continue de sortie de source de puissance, ladite source de puissance comportant, en outre, un circuit de détection de la tension entre les électrodes de puissance de chaque interrupteur de l'onduleur délivrant des signaux de tension et un circuit de pilotage recevant lesdits signaux de commande émis par le circuit de commande ainsi que lesdits signaux de tension et adapté pour délivrer à chacun des interrupteurs un signal de pilotage correspondant à un ordre de blocage lorsque ledit signal de commande correspond à un ordre de blocage et/ou lorsque la tension entre les électrodes de puissance est sensiblement différente de zéro et correspondant à une autorisation d'amorçage lorsque ledit signal de commande correspond à une autorisation d'amorçage et que la tension entre les électrodes de puissance est sensiblement nulle.

L'utilisation du circuit de l'invention permet donc d'obtenir un poste avec source de puissance comprenant un onduleur dont les interrupteurs ne peuvent être autorisés à amorcer que lorsqu'ils présentent une tension quasi nulle entre leurs électrodes de puissance.

Selon le cas, le poste de l'invention peut comprendre l'une ou plusieurs des caractéristiques suivantes :
- chaque circuit de détection est adapté pour fournir un signal de tension à deux états logiques, un état haut correspondant à une tension entre les électrodes de puissance sensiblement nulle et un état bas correspondant à une tension sensiblement différente de zéro, ledit circuit de pilotage délivrant à chaque interrupteur un signal de pilotage à deux états logiques, un état haut lors de la réception d'une autorisation d'amorçage simultanément à la détection d'une tension sensiblement nulle, et un état bas dans tous les autres cas ;
- ledit circuit de pilotage comprend des unités logiques recevant chacune en entrée un signal de commande destiné à un interrupteur et un signal de tension aux bornes dudit interrupteur afin de lui délivrer un signal de pilotage ;
- lesdits interrupteurs sont commandés deux à deux et ledit circuit de pilotage comprend des unités logiques, chacune recevant un signal de commande destiné à deux interrupteurs et des signaux de tension aux bornes de chacun desdits interrupteurs pour leur délivrer le même signal de pilotage ;
- chaque circuit de détection comprend un générateur de tension de référence de très faible valeur par rapport à la tension maximale entre les électrodes de puissance et un comparateur adapté pour délivrer un signal de tension en fonction des valeurs relatives de la tension de référence et de la tension entre les électrodes de puissance ;
- ledit transformateur est un transformateur planar couplé comprenant deux éléments en série au primaire et deux éléments en parallèle au secondaire.

L'invention sera mieux comprise à la lecture de la description qui va suivre, donnée uniquement à titre d'exemple et faite en se référant aux dessins annexés, sur lesquels :
- la Fig.1 dont il a déjà été fait mention, représente un circuit électrique d'une source de puissance de l'état de l'art ;
- la Fig.2 représente un schéma électrique d'une source de puissance pour poste selon l'invention ; et
- la Fig.3 représente un schéma synoptique d'un poste de soudage utilisant une source de puissance selon l'invention.

Dans la suite du texte, un ensemble de composants de même nature est désigné à l'aide d'une unique référence numérique générale tandis que chaque composant de cet ensemble est désigné à l'aide de cette référence numérique avec un indice. Ces indices sont attribués selon une notation matricielle, l'utilisation de deux indices séparés par une virgule correspondant à des numéros de colonne et de ligne dans cet ordre.

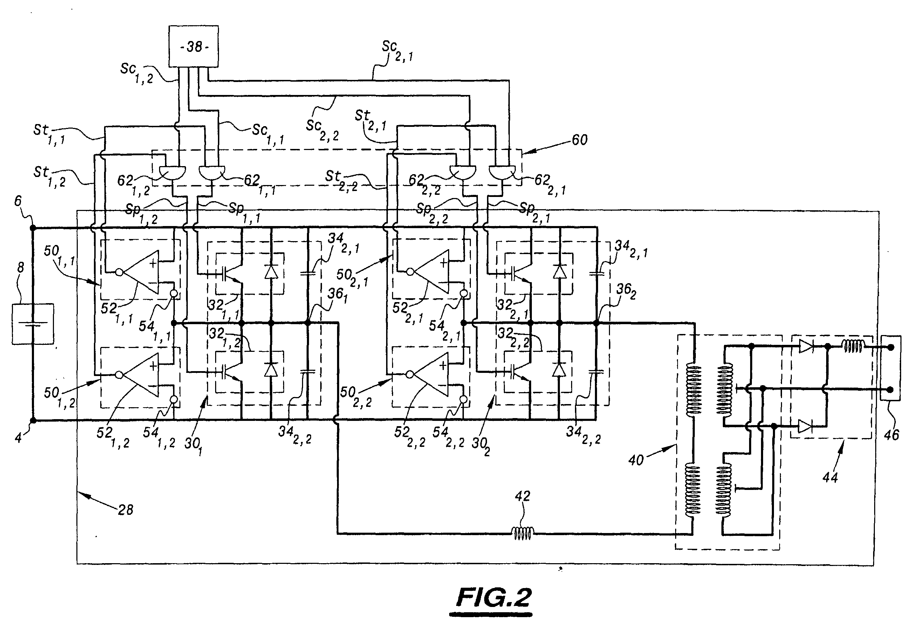

Sur la figure 2, on a représenté le circuit électrique d'une source de puissance pour un poste selon l'invention. Elle comporte un onduleur 28 qui est raccordé entre les bornes 4 de référence et 6 d'alimentation, de la source de tension continue 8 telle que définie précédemment en référence à la figure 1. Dans l'exemple, la source de tension 8 délivre une tension continue de 600 volts.

Dans le mode de réalisation décrit, la source de tension continue 8 est extérieure à la source de puissance de l'invention qui se raccorde à ses bornes. En variante, la source de tension continue 8 peut être intégrée dans la source de puissance de l'invention.

L'onduleur 28 comporte deux cellules ou bras de commutation 30₁ et 30₂ (dits « legs » en anglais), disposées en parallèle entre les bornes 4 et 6 et comportant chacune des interrupteurs reliés en série entre les bornes 4 et 6. Ces interrupteurs sont désignés de manière générale par la référence numérique 32 et de manière particulière par les références 32_{1,1}, 32_{1,2}, 32_{2,1} et 32_{2,2}. Ils comportent chacun et de manière classique, deux électrodes de puissance et une électrode de commande.

Les interrupteurs 32 sont chacun disposés également en parallèle avec un élément capacitif 34 d'aide à la commutation et formant élément de résonance. Par exemple, les interrupteurs 32 sont des interrupteurs de type dit MOSFET tels que par exemple les composants désignés IXKN45N80C et les éléments capacitifs 34 sont des capacités de 2,2 nano-Farads (nF).

La cellule de commutation 10₁ présente une borne de sortie 36₁ entre les deux interrupteurs 32_{1,1}, 32_{1,2} et la cellule de commutation 10₂ présente une borne de sortie 36₂ entre les interrupteurs 32_{2,1}, 32_{2,2}.

La source de puissance comprend également un dispositif de commande 38 extérieur à l'onduleur 28 et adapté pour une commande forcée de blocage des interrupteurs 32 et leur amorçage spontané. Une telle commande est réalisée de manière classique, chacun des interrupteurs 32 recevant un signal Sc_{1,1}, Sc_{1,2}, Sc_{2,1} et Sc_{2,2} véhiculant des commandes de blocage et des autorisations d'amorçage.

Les signaux de commande Sc des interrupteurs 32 d'une même cellule sont complémentaires l'un à l'autre et sont symétriques, c'est-à-dire que les signaux de commande de deux interrupteurs opposés de deux cellules différentes sont identiques.

Ainsi, les signaux Sc_{1,1} et Sc_{2,2} sont identiques, de même que les signaux Sc_{1,2} et Sc_{2,1}. Les interrupteurs 32 sont dits commandés deux à deux.

L'onduleur 28 est relié à un transformateur 40 dont le primaire est relié en série entre les sorties 36₁ et 36₂ des deux cellules de commutation 30.

Dans le mode de réalisation, le transformateur 40 est un transformateur planar couplé de deux fois 10,5 kW, les bobines du primaire étant en série et les bobines du secondaire étant en parallèle. Un tel transformateur est classique dans le domaine de l'électronique de puissance et ne sera pas décrit plus en détail.

L'onduleur 28 comporte également un élément inductif 42 disposé en série entre la borne de sortie 36₁ de la première cellule de commutation 30₁ et le primaire du transformateur 40.

Dans l'exemple, l'élément inductif 42 est une inductance de 3 micro-Henry (µH).

Le secondaire du transformateur 40 est reliée à un redresseur 44 de type classique utilisant des diodes DSEP 2x101 (400 volts de 2 fois 100 A), et une inductance de 5 µH.

Les bornes de sortie du redresseur 44 forment directement les bornes de sortie de la source de puissance et sont désignées par la référence 46.

Par ailleurs, un circuit de détection 50 est placé entre les électrodes de puissance ou bornes de chacun des interrupteurs 32.

Chacun de ces circuits 50 comporte un comparateur inverseur 52, connecté entre les bornes des interrupteurs 32, de manière à comparer entre eux les niveaux de tension sur chacune des bornes, soit à comparer la tension aux bornes des interrupteurs 32 par rapport à zéro.

Pour chaque circuit de détection 50, un générateur de tension de référence 54 est en outre intercalé entre une borne d'entrée du comparateur 52 et une borne d'un interrupteur 32.

Cette tension de référence est faible par rapport à la tension maximale pouvant apparaître entre les électrodes de puissance d'un interrupteur 32, par exemple de l'ordre de 17 V.

Ainsi, chaque circuit 50 permet la détection d'une tension nulle ou quasi nulle, aux bornes d'un interrupteur 32. La détection d'une telle tension se traduit par l'émission d'un signal de tension St qui est dans un état logique haut lorsque la tension aux bornes de l'interrupteur 32 correspondant est nulle voire quasi nulle et dans un état logique bas le reste du temps.

Enfin, le dispositif de l'invention comporte également un étage supplémentaire de commande formé d'un circuit de pilotage 60 intercalé entre le dispositif de commande 38 et les interrupteurs 32. Ce circuit 60 reçoit en entrée les signaux de commande Sc émis par le dispositif de commande 38 ainsi que les signaux de tension St émis par les circuits de détection 50.

Dans le mode de réalisation décrit, le circuit de pilotage 60 comprend plusieurs unités logiques 62 adaptées chacune pour réaliser, pour chaque interrupteur 32, une fonction logique ET entre son signal de commande Sc et son signal de tension St et délivrer un signal de pilotage Sp à l'interrupteur 32 correspondant.

Ainsi, l'unité logique 62_{1,2} délivre un signal Sp_{1,2} qui correspond à une fonction logique ET entre le signal de commande Sc_{1,2} destiné à l'interrupteur 32_{1,2} et le signal de détection de tension St_{1,2} délivré par le circuit 50_{1,2} de détection de la tension aux bornes de l'interrupteur 32_{1,2}.

Dans le mode de réalisation décrit, le signal de pilotage Sp est directement applicable à chacun des interrupteurs 32.

En fonction de la nature des interrupteurs 32, un circuit d'adaptation peut être intercalé entre la sortie des unités logiques 62 et des interrupteurs 32 afin de permettre la génération d'un signal de pilotage adapté aux interrupteurs.

En fonctionnement, les signaux de commande Sc délivrés par le dispositif de commande 38, possèdent deux niveaux correspondant à un état logique haut pour une autorisation d'amorçage et un état logique bas pour un ordre de blocage.

Le circuit de pilotage 60 transmet donc un ordre de blocage en délivrant à chaque interrupteur 32, un signal de pilotage Sp de niveau logique bas lorsqu'il a reçu un signal de commande SC d'un même niveau logique et/ou lorsque la différence de potentiel aux bornes de l'interrupteur 32 est supérieure à la tension de référence générée par le générateur 54, c'est-à-dire lorsque le signal St est à un niveau bas.

Les ordres de blocage émis par le dispositif de commande 38 sont donc directement transmis aux interrupteurs.

Au contraire, une autorisation d'amorçage correspondant à un signal de commande SC à haut niveau logique haut, ne sera transmise que lors de la détection d'une tension nulle ou quasi nulle aux bornes de l'interrupteur correspondant, c'est-à-dire lorsque le signal St de détection de tension sera également à un niveau haut.

Le dispositif de l'invention permet donc de s'assurer que les interrupteurs 32 de l'onduleur 28 reçoivent une autorisation d'amorçage émise par le dispositif de commande 38 uniquement lorsque la tension à leurs bornes est nulle ou quasi nulle.

Le détail d'un tel circuit de pilotage est décrit dans le document FR-A-2 564 662. Plus particulièrement, on pourra se référer au passage qui s'étend de la page 3, ligne 12 à la page 6, ligne 2 de ce document.

L'application d'un tel circuit de pilotage à un onduleur formant partie d'une source de puissance d'un poste de soudage, permet ainsi d'empêcher un court-circuit sur une cellule de commutation de l'onduleur, réduisant de ce fait les risques liés à l'utilisation d'un tel poste de soudage. Une telle application de ce circuit de pilotage aux onduleurs des postes de soudage n'avait jamais été envisagée auparavant et le bénéfice qui en découle est tout à fait inattendu.

En particulier, le rendement global du poste de soudage est nettement amélioré grâce à la suppression de la commande d'amorçage forcée et les commandes de blocage existant étant assistées par les condensateurs d'aide à la commutation donnés par la référence numérique 34, la commande d'un tel poste de soudage étant ainsi simplifiée.

Par ailleurs, en variante dans le cadre d'une commande des interrupteurs deux à deux, le dispositif de commande n'émet que deux signaux de commande, chacun destiné à deux interrupteurs symétriquement opposés et appartenant à deux cellules de commutation différentes.

Dans ce mode de réalisation, les unités logiques comprises dans le circuit de pilotage sont prévues pour délivrer un seul signal de pilotage distribué sur les deux interrupteurs et correspondant à une fonction ET logique entre le signal de commande et les signaux de tension de chacun des deux interrupteurs.

Ainsi, un ordre de blocage est émis lorsque le signal de commande correspond à un ordre de blocage et/ou à la détection d'une tension sensiblement non nulle aux bornes de l'un quelconque des deux interrupteurs commandés deux à deux.

Inversement, une autorisation d'amorçage est transmise uniquement lorsque le signal de commande correspond à une autorisation d'amorçage et que la tension aux bornes des deux interrupteurs commandés deux à deux est sensiblement nulle.

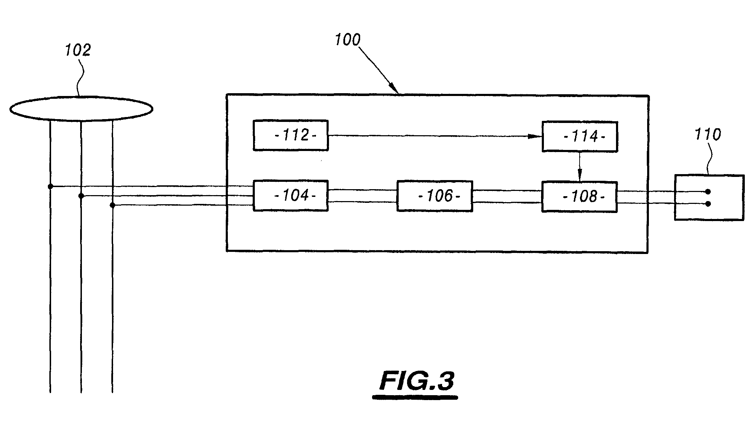

En référence à la figure 3, on va maintenant décrire un poste de soudage mettant en oeuvre une source de puissance selon l'invention.

Le poste de soudage 100 est relié à un réseau de transfert d'énergie électrique tel qu'un réseau triphasé 102.

L'énergie reçue provenant du réseau triphasé 102 est reçue tout d'abord dans des moyens d'isolation tels que, par exemple, un transformateur 104 réalisant une isolation galvanique entre le poste de soudage 100 et le réseau triphasé 102.

Le transformateur 100 délivre un signal alternatif de puissance à un redresseur 106 formant source de tension continue auquel vient se raccorder un onduleur 108 correspondant à l'onduleur 28 tel que décrit sur la figure 2.

Le transformateur 104, le redresseur 106 et l'onduleur 108 ainsi combinés forment un convertisseur de puissance entre une source de tension alternative et une source de tension continue.

Les bornes de sortie de l'onduleur 108 sont raccordées à des bornes de soudage 110 formant les bornes de soudage pour la réalisation d'une soudure à l'arc.

Par ailleurs, le poste de soudage 100 comporte également des moyens 112 d'entrée d'une consigne pour le soudage. Cette consigne est transmise à un dispositif de commande 114 correspondant au dispositif de commande 38 décrit en référence à la figure 2. Le dispositif de commande 114 délivre enfin des signaux de commande à l'onduleur 108 pour la formation d'un signal de sortie aux bornes 110, correspondant à la consigne.

L'onduleur 108 avec ses bornes de sortie 110 est associé au dispositif de commande 114 formant ainsi une source de puissance.

Bien entendu, différents types de commandes et de consignes peuvent être envisagés en fonction des applications souhaitées. Notamment on peut utiliser la source de puissance de l'invention dans un poste de soudage à commande à rapport cyclique variable ou à déphasage.

Par ailleurs, les composants utilisés, notamment dans l'onduleur, peuvent être réalisés de plusieurs manières différentes.

Les interrupteurs peuvent être formés de manière classique d'un ou plusieurs transistors ou MOSFET identiques placés en série, de sorte que les interrupteurs dans leur ensemble sont unidirectionnels en tension et bidirectionnels en courant et sont formés de composants électroniques unidirectionnels en tension et unidirectionnels en courant.

Les éléments capacitifs peuvent être formés de plusieurs condensateurs disposés en parallèle, et les éléments inductifs de plusieurs inductances connectées en série.

Le nombre et la nature de chacun des composants électroniques utilisés, varient en fonction de la tension maximale et du courant maximal applicables entre les bornes de chaque interrupteur.

Par ailleurs, différents composants électroniques peuvent être cumulés, un même composant remplissant plusieurs fonctions. Le dimensionnement de tels composants doit toutefois tenir compte des contraintes imposées par les différentes fonctions.

## Revendications

1. Poste de soudage comportant une source de puissance et un onduleur quasi résonnant à commutation douce comportant des moyens (4, 6) de raccordement à une source d'alimentation (8) en énergie électrique présentant une borne d'alimentation (6) en tension continue et une borne de référence (4), l'onduleur (28) comprenant au moins une cellule de commutation (30) de type quasi résonnant, chacune comportant un nombre pair d'interrupteurs (32) connectés en série entre lesdites bornes d'alimentation et de référence (4, 6) et comportant une borne de sortie (38) prise entre les deux interrupteurs centraux de ladite cellule (30), chaque interrupteur (32) étant connecté en parallèle à un élément capacitif (34) et en série à un élément inductif (58) formant éléments de résonance, la source comprenant en outre un circuit de commande (38) desdits interrupteurs (32) délivrant des signaux de commande (Sc) auxdits interrupteurs correspondant à des ordres de blocage et à des autorisations d'amorçage et un transformateur (40) dont l'élément primaire est relié auxdites bornes de sortie (38) des cellules de commutation (30) et dont le secondaire est relié et à un redresseur (44) délivrant une tension continue de sortie de source de puissance, ladite source de puissance comportant, en outre, un circuit (50) de détection de la tension entre les électrodes de puissance de chaque interrupteur (32) de l'onduleur (28) délivrant des signaux de tension (St) et un circuit de pilotage (60) recevant lesdits signaux de commande (Sc) émis par le circuit de commande (38) ainsi que lesdits signaux (St) de tension et adapté pour délivrer à chacun des interrupteurs (32) un signal de pilotage (Sp) correspondant à un ordre de blocage lorsque ledit signal de commande (Sc) correspond à un ordre de blocage et/ou lorsque la tension entre les électrodes de puissance est sensiblement différente de zéro et correspondant à une autorisation d'amorçage lorsque ledit signal de commande (Sc) correspond à une autorisation d'amorçage et que la tension entre les électrodes de puissance est sensiblement nulle.

2. Poste selon la revendication 1, **caractérisé en ce que** chaque circuit (50) de détection est adapté pour fournir un signal de tension (St) à deux états logiques, un état haut correspondant à une tension entre les électrodes de puissance sensiblement nulle et un état bas correspondant à une tension sensiblement différente de zéro, ledit circuit de pilotage (60) délivrant à chaque interrupteur un signal de pilotage (Sp) à deux états logiques, un état haut lors de la réception d'une autorisation d'amorçage simultanément à la détection d'une tension sensiblement nulle, et un état bas dans tous les autres cas.

3. Poste selon la revendication 2, **caractérisé en ce que** ledit circuit de pilotage (60) comprend des unités logiques (68) recevant chacune en entrée un signal de commande (Sc) destiné à un interrupteur (32) et un signal de tension (St) aux bornes dudit interrupteur (32) afin de lui délivrer un signal de pilotage (Sp).

4. Poste selon la revendication 2, **caractérisé en ce que** lesdits interrupteurs sont commandés deux à deux et **en ce que** ledit circuit de pilotage comprend des unités logiques, chacune recevant un signal de commande destiné à deux interrupteurs et des signaux de tension aux bornes de chacun desdits interrupteurs pour leur délivrer le même signal de pilotage.

5. Poste selon l'une des revendications 1 à 4, **caractérisé en ce que** chaque circuit de détection (50) comprend un générateur (54) de tension de référence de très faible valeur par rapport à la tension maximale entre les électrodes de puissance et un comparateur (52) adapté pour délivrer un signal de tension (St) en fonction des valeurs relatives de la tension de référence et de la tension entre les électrodes de puissance.

6. Poste selon l'une des revendications 1 à 5, **caractérisé en ce que** ledit transformateur (40) est un transformateur planar couplé comprenant deux éléments en série au primaire et deux éléments en parallèle au secondaire.
